# EUROPEAN PATENT SPECIFICATION

(11) **EP 1 122 159 B1**
(45) Date of publication and mention of the grant of the patent: **19.09.2007**
(21) Application number: 01102607.7
(22) Date of filing: 06.02.2001
(51) Int. Cl.: B62K 19/46, B62K 11/10

(54) **Scooter-type vehicle**
Motorrollerartiges Fahrzeug
Véhicule du type scooter

(30) Priority: 07.02.2000 JP 2000029599
(43) Date of publication of application: 08.08.2001
(60) Divisional application: 06019472.7
(73) Proprietor: SUZUKI KABUSHIKI KAISHA, Shizuoka-Ken (JP)
(72) Inventor: Kurata, Koji, Hamamatsu-shi, Shizuoka-ken (JP)
(74) Representative: Klunker . Schmitt-Nilson . Hirsch

(56) References cited:
- EP-A- 0 806 557
- EP-A- 0 937 636

## Description

### BACKGROUND OF THE INVENTION

The present invention relates to a scooter type vehicle, and more particularly to a scooter type vehicle provided with a fuel injection type intake apparatus.

In a prior art, there has been provided a structure using a carburetor as means for supplying an air-fuel mixture to an engine (EP 0 806 557 A1). The carburetor generally has a structure to obtain a best setting by combining some kinds of jets in order to respond to a requirement for traveling. However, it is impossible to expediently correspond to changes of driving conditions, circumferential environments and the like.

Accordingly, in recent years, there has been popularly proposed an engine provided with a fuel injection type intake apparatus which detects a throttle opening degree, an engine rotational number, an engine temperature, an external air temperature, an external air pressure and the like by a sensor and then processes the information mentioned above by a computer so as to directly inject a required fuel, of an amount which is most suitable at that time, to an intake passage of the engine.

The fuel injection type intake apparatus has advantages such as that a combustion efficiency is improved and an output can be improved. However, a fuel consumption amount is reduced since only a minimum required amount of fuel is injected, an amount of harmful objects in an exhaust gas is reduced and the like, so that the fuel injection type intake apparatus has been generally employed in an automobile.

However, in the case of a compact vehicle such as a scooter type vehicle, since a lot of parts are provided within a limited narrow space, it is necessary to sufficiently consider arrangement of a controller having a computer installed, a fuel pump and various kinds of sensors in the case that a fuel injection type intake apparatus is newly provided.

In particular, since most of the scooter type vehicles have structures which are exposed to an external environment, it is particularly important, in the case of desiring an accurate control, to arrange a controller having a weak point with respect to heat, water, dust or the like with a maximum care.

The scooter type vehicle is frequently provided with a unit swing type engine which swings vertically together with a rear wheel as a drive wheel, and the fuel injection type intake apparatus is in many cases provided on an upper surface of the unit swing type engine so as to be integrally swung therewith. Accordingly, a position of a bottom surface of an article accommodation (storage) box arranged above the unit swing type engine is restricted.

Although a capacity of the article accommodation box can be increased at a certain degree by reducing an amount of stroke of a rear cushion unit elastically supporting the unit swing type engine, a rider's feeling is deteriorated.

### SUMMARY OF THE INVENTION

The present invention is made by taking the matters mentioned above into consideration, and an object of the present invention is to provide a scooter type vehicle provided with a controller arranged so as to accurately control a fuel injection type intake apparatus.

Another object of the present invention is to provide a scooter type vehicle capable of sufficiently securing a capacity or inner volume of an article accommodation box or chamber without deteriorating a rider's feeling.

These and other objects can be achieved according to the present invention as defined in claim 1 by providing the following aspects of the embodiments.

That is, the scooter type vehicle comprises:
a unit swing type engine provided with an engine body having a cylinder assembly forward inclined in a substantially horizontal direction and having a central axis arranged along a longitudinal direction of a vehicle body and a transmission case rearward extending from one side of the engine body and supporting a rear wheel to a rear end thereof, swingably pivoted to a vehicle body frame and flexibly supported to a vehicle body frame through a cushion unit;
a fuel injection type intake apparatus comprising a throttle body connected to an intake port of the cylinder assembly, an air cleaner connected to the throttle body, fuel injecting means and a controller for controlling a fuel injection amount of the fuel injecting means; and
an accommodation box arranged above the unit swing type engine, and in such scooter type vehicle:
   a bottom surface of the accommodation box is formed in an obliquely forward descending manner so as to be substantially parallel to a line connecting the highest position of the unit swing type engine in a state that said cushion unit is most compressed and the highest position of the fuel injecting means or the air cleaner, and controller is arranged adjacent to a fuel tank which is arranged in the longitudinal direction of the vehicle body behind the accommodation box.

According to this aspect, it is possible to sufficiently secure the capacity of the article accommodation box and it is also possible to protect the controller from the heat from the unit swing type engine or the radiator and from water, dust and the like.

In another aspect of the scooter type vehicle mentioned above, the fuel injecting means is arranged adjacent to the accommodation box, the highest portion of the fuel injecting means is arranged at a position higher than a bottom surface of the accommodation box, and the controller remains arranged adjacent to the fuel tank arranged in the longitudinal direction of the vehicle body behind the accommodation box.

According to this aspect, it is possible to receive a long article and it is still possible to protect the controller from the heat from the unit swing type engine or the radiator and from water, dust and the like.

In a further aspect of the scooter type vehicle mentioned above, the fuel injecting means is arranged adjacent to the accommodation box, one end portion of a throttle cable for operating a throttle valve provided within the throttle body and adjusting a flow amount of an intake air is arranged adjacent to the accommodation box, and the controller remains arranged adjacent to the fuel tank arranged in the longitudinal direction of the vehicle body behind the accommodation box.

According to this aspect, an operability of the throttle cable is improved, and it is still possible to protect the controller from heat from the engine or the radiator and from water, dust and the like.

Further, in the above aspects, a projection for fixing the controller may be provided to the fuel tank to make short the length of the wire between both the elements. Furthermore, a battery may be further arranged in adjacent to the controller in parallel thereto so as to be easily fixed.

The nature and further characteristic features of the present invention will be made more clear from the following descriptions made with reference to the accompanying drawings.

### BRIEF DESCRIPTION OF THE DRAWINGS

In the accompanying drawings:
Fig. 1 is a left side elevational view showing a first example of a first embodiment of a scooter type vehicle in accordance with the present invention;
Fig. 2 is a left side elevational view showing an internal structure of the scooter type vehicle shown in Fig. 1;
Fig. 3 is a schematic plan view of the scooter type vehicle shown in Figs. 1 and 2;
Fig. 4 is a schematic view of a fuel injection system for the scooter type vehicle of Fig. 1;
Fig. 5 is an enlarged left side elevational view of a fuel tank of the scooter type vehicle of Fig. 1;
Fig. 6 is an enlarged plan view of the fuel tank;
Fig. 7 is a left side elevational view showing an internal structure of a second example of the first embodiment of the scooter type vehicle to which the present invention is applicable;
Fig. 8 is a schematic plan view of the scooter type vehicle shown in Fig. 7;
Fig. 9 is a left side elevational view showing an internal structure of a third example of the first embodiment of the scooter type vehicle to which the present invention is applicable;
Fig. 10 is a schematic plan view of the scooter type vehicle shown in Fig. 9;
Fig. 11 is a left side elevational view showing an internal structure of a first example of a second embodiment of the scooter type vehicle to which the present invention is applicable;
Fig. 12 is a schematic plan view of the scooter type vehicle shown in Fig. 11;
Fig. 13 is a left side elevational view showing an internal structure of a second example of the second embodiment of the scooter type vehicle to which the present invention is applicable;
Fig. 14 is a schematic plan view of the scooter type vehicle shown in Fig. 13;
Fig. 15 is a left side elevational view showing an internal structure of a third example of the second embodiment of the scooter type vehicle to which the present invention is applicable;
Fig. 16 is a schematic plan view of the scooter type vehicle shown in Fig. 15;
Fig. 17 is a left side elevational view showing an internal structure of a fourth example of the second embodiment of the scooter type vehicle to which the present invention is applicable;
Fig. 18 is a schematic plan view of the scooter type vehicle shown in Fig. 17;
Fig. 19 is a left side elevational view showing an internal structure of a first example of a third embodiment of the scooter type vehicle to which the present invention is applicable;
Fig. 20 is a schematic right side elevational view of the scooter type vehicle shown in Fig. 19;
Fig. 21 is a schematic plan view of the scooter type vehicle shown in Figs. 19 and 20;
Fig. 22 is a left side elevational view showing an internal structure of a second example of the third embodiment of the scooter type vehicle to which the present invention is applicable;
Fig. 23 is a schematic plan view of the scooter type vehicle shown in Fig. 22;
Fig. 24 is a schematic view showing a structure in which an injector is arranged between a throttle body and an intake port, and an intake pipe extends from a rear portion of an engine main body; and
Fig. 25 is a schematic view showing a structure in which the injector is arranged between the throttle body and the intake port, and the intake pipe extends from a front portion of the engine main body.

### DESCRIPTION OF THE PREFERRED EMBODIMENTS

Preferred embodiments of the present invention will be described hereunder with reference to various examples shown in the accompanying drawings.

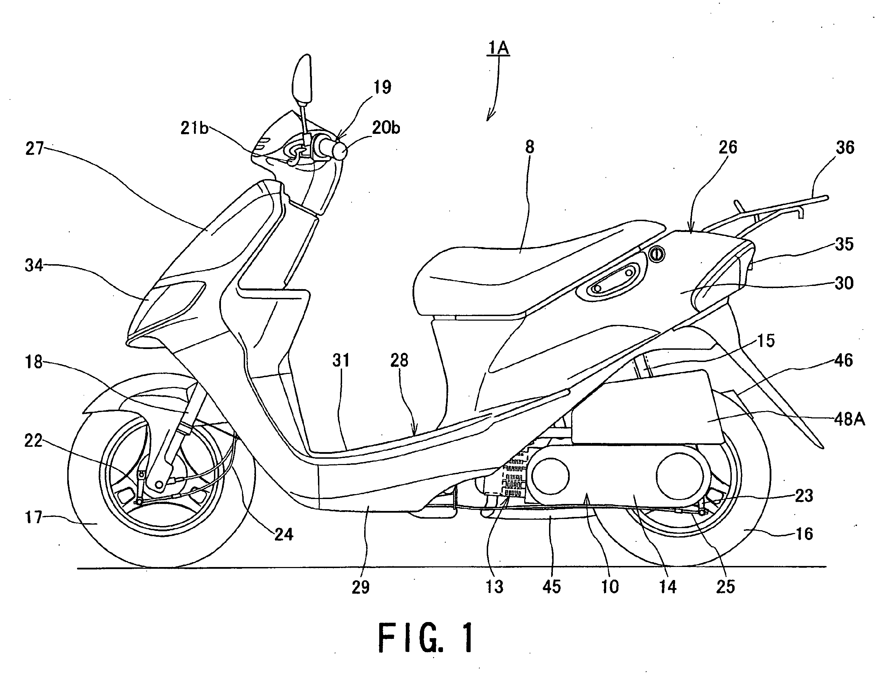

A first example of a first embodiment will be first described with reference to Figs. 1 to 6.

As shown in Figs. 1 to 3, a scooter type vehicle 1A has a vehicle body frame 2. The vehicle body frame 2 is provided with a head pipe 3 in a forefront portion thereof and is constituted by a downtube 4 extending from a rear lower portion of the head pipe 3 towards a rear downward portion and extending in a substantially horizontal direction towards a rear portion from an intermediate portion thereof, and a pair of right and left rear frames 5 extending towards a rear upper portion from a rear end side of the downtube 4.

An article accommodation (storage) box 7A for accommodating (storing) an article such as helmet 6 is disposed above the rear frames 5. Further, a driver seat 8 commonly serving as a lid for the article accommodation box 7A is placed above the box 7A in a manner to be freely opened and closed, and a fuel tank 9A is arranged in a rear portion of the accommodation box 7A.

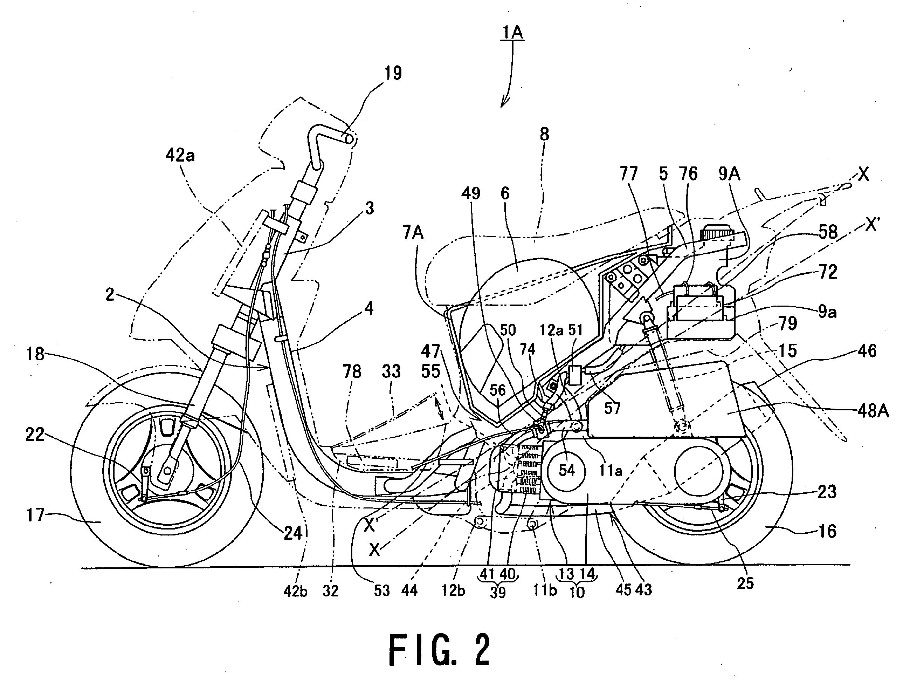

A unit swing type engine 10 is arranged in a substantially central lower portion of the rear frames 5. A pair of right and left engine suspending bosses 11a provided in parallel in a width direction of the vehicle body are provided on an upper surface of the unit swing type engine 10, and the engine suspending bosses 11a are pivoted to a pair of right and left engine suspending brackets 12a provided in a substantially central lower portion of the rear frames 5, so that the unit swing type engine 10 is swingably supported. In this case, as shown by a double-dotted chain line in Fig. 2, the structure may be made such that engine suspending bosses 11b are provided on a lower surface of the unit swing type engine 10 and the unit swing type engine 10 is pivoted to engine suspending brackets 12b provided in a rear end lower portion of the downtube 4.

The unit swing type engine 10 is integrally provided with an engine main body 13 and a transmitting case 14 rearward extending from a left side toward one side of the engine main body 13, that is, a forward moving direction of the vehicle in the present embodiment. The transmission case 14 commonly serves as a swing arm and is elastically supported to the rear frame 5 by a rear cushion unit 15. A rear wheel 16 as a driving wheel is pivoted to a rear end of the transmission case 14.

A front fork 18 rotatably supporting a front wheel 17, a handle bar 19 and the like are provided in the head pipe 3. Grips 20a and 20b are provided at both ends of the handle bar 19, in which the right grip 20a in a forward moving direction of the vehicle serves as a throttle grip. Further, brake levers 21a and 21b are provided in front sides of both of the grips 20a and 20b and connected respectively to brake apparatus 22 and 23 disposed to the front wheel 17 and the rear wheel 16 via brake wires 24 and 25. The front wheel 17 is rotatably steered to right and left by the handle bar 19.

Furthermore, the vehicle frame 2 is surrounded by a vehicle body cover 26 which constitutes an outer appearance of the vehicle body. The vehicle body cover 26 is structured by combining a plurality of cover elements. The cover elements are particularly constituted by, for example, a front leg shield 27, a rear leg shield 28, a lower leg shield 29, a rear frame cover 30 and others.

A portion between the driver seat 8 and the head pipe 3 is largely curved downward, and the rear leg shield 28 provided with a step floor 31 on which a rider puts both feet is arranged in a bottom portion thereof. The rear leg shield 28 is arranged so as to cover a horizontal portion of the downtube 4 from the above and is fixed to the downtube 4. Further, the lower leg shield 29 is arranged below the rear leg shield 28 so as to cover the horizontal portion of the downtube 4 from the below. A floor lower portion receiving chamber 32 is disposed in a space formed between the rear leg shield 28 and the lower leg shield 29, so that it is possible to access an interior portion thereof by freely opening and closing a lid 33 provided to the step floor 31. Furthermore, the front leg shield 27 standing upward from a front portion of the rear leg shield 28 is arranged so as to cover front and rear portions of the head pipe 3 and is fixed to a stand-up portion of the downtube 4, and a head light 34 is disposed in a front lower portion of the front leg shield 27.

On the contrary, the rear frame cover 30, for example, formed in a laterally separated manner or in an integral manner is provided in a periphery of the rear frame 5 so as to surround the right and left portions of the rear frame 5. Further, a combination lamp 35 is provided at a rear end of the rear frame cover 30. A rear carrier 36 is provided above the combination lamp 35. In this case, the cover element is molded by a plastic resin material, for example, a PP resin, an ABS resin or the like.

The unit swing type engine 10 of the scooter type vehicle 1A of the first example is provided with a general forced-air-cooling-type four-stroke-cycle one cylinder engine main body 13. The engine main body 13 is constituted by a crank case 37 provided with a crank shaft, not shown, mainly extending in a width direction of the vehicle body and a cylinder assembly 39 forward inclined in a substantially horizontal direction towards a front side of the crank case 37 and having a central axis Z-Z arranged along a forward moving direction of the vehicle.

Further, the cylinder assembly 39 has a cylinder block 40 arranged in a front side of the crank case 37 and a cylinder head 41 arranged in a front side of the cylinder block 40. A piston, not shown, is slidably installed within the cylinder block 40 and a valve moving apparatus, not shown, is installed in the cylinder head 41.

In this example, the engine main body 13 may be a two-stroke-cycle engine, a multi-cylinder engine or a water-cooling-type engine. Further, in the case of the water-cooling-type engine, it is desirable that the radiator is arranged at a position with which a running wind is easily brought into contact, for example, a forward portion 42a of the head pipe 3 and a front portion 42b of the downtube 4 below the head pipe 3.

A general type exhaust apparatus 43 is provided for the unit swing type engine 10 and the exhaust apparatus 43 is composed of an exhaust pipe 45 and a muffler 46 connected to a downstream end of the exhaust pipe 45. The exhaust pipe 45 has a base end portion connected to an exhaust port 44 in a lower side within the cylinder head 41 and extending towards a lower portion opposite to the transmission case 14 of the unit swing type engine 10, that is, rearward along a right lower portion towards a vehicle moving direction in the present embodiment. The muffler 46 extends towards a rear oblique upper portion.

A fuel injection type intake apparatus 47 is also disposed to the unit swing type engine 10. The intake apparatus 47 is provided, as main elements, with an air cleaner 48A sucking the external air so as to make it clean, a throttle body 49 adjusting a flow amount of the sucked external air (hereinafter, refer to an intake air), an injector 50 as a fuel injecting means for injecting a fuel into an intake passage 49a of the throttle body 49, a fuel pump 51 feeding, under pressure, the fuel in the fuel tank 9A to the injector 50 and others.

A flow amount of the intake air is adjusted by opening and closing a throttle valve 52 disposed in the intake passage 49a, and the opening and closing operation thereof is performed by the throttle grip 20a connected through a throttle cable 53 extending from the throttle body 49.

Furthermore, the air cleaner 48A and the throttle body 49 are connected by a suction pipe 54, and the throttle body 49 and an intake port 55 in an upper side within the cylinder head 41 are connected by an intake pipe 56. Then, the suction pipe 54 and the intake pipe 56 constitute an intake passage connecting the intake port 55 to the air cleaner 48. The fuel tank 9A and the fuel pump 51, as well as the fuel pump 51 and the injector 50, are connected to each other by means fuel hoses 57.

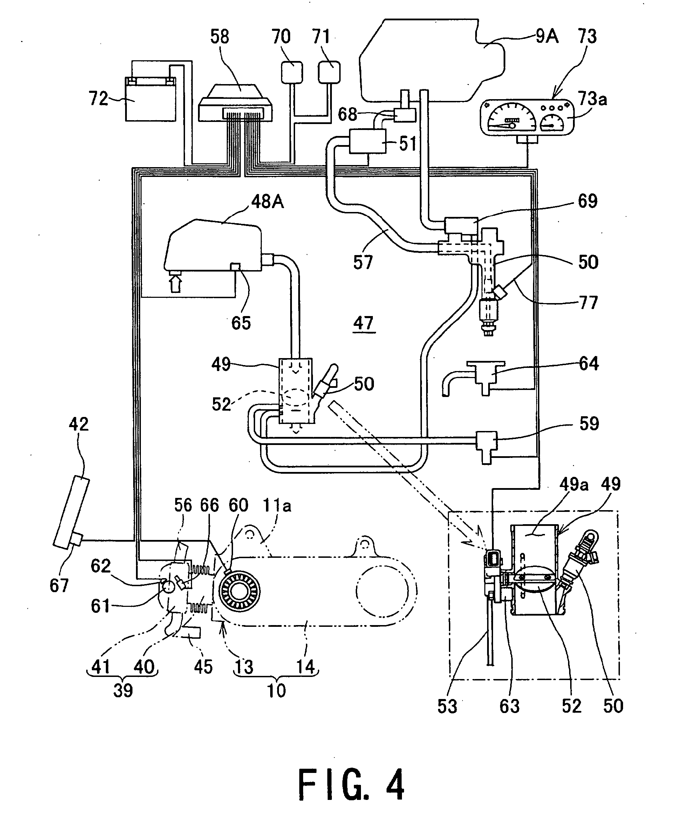

Further, an amount, a timing and the like of the fuel injection performed by the injector 50 are electronically controlled by a controller 58. A fuel injection system will be explained hereunder with reference to Fig. 4.

With reference to Fig. 4, the fuel injection system is composed of a sensor unit, a control unit and an injection unit. The sensor unit is disposed for obtaining data necessary for determining and correcting a basic injection amount of the fuel and is provided with an intake pressure sensor 59 for detecting an intake pressure in the intake passage 49a of the throttle body 49, a signal generator 60 (a rotational number sensor) for detecting a rotational number of the crank shaft, a cam position sensor 62 for detecting a position (a valve timing) of a cam shaft 61 in the cylinder head 41 and a throttle position sensor 63 for detecting an opening degree of the throttle valve 52 in the intake passage 49a, in order to determine an amount of injection.

Furthermore, in order to correct the amount of injection, there are provided with an atmospheric pressure sensor 64 for detecting an atmospheric pressure, an intake temperature sensor 65 mounted to the air cleaner 48A and detecting a temperature of the intake air, a plug seat temperature sensor 66 for detecting a temperature of an ignition plug mounting seat in the case that the engine main body 13 is of an air-cooling-type, a water temperature sensor 67 mounted to the radiator 42 and detecting a temperature of a cooling water in the case that the engine main body 13 is of a water-cooling-type. Then, the data obtained by the sensor units are transmitted to the controller 58 as a control portion, thus determining the amount and the timing of the fuel injection.

Furthermore, data about the amount and the timing of the fuel injection determined by the controller 58 are transmitted to the injection unit to control each of the apparatus or devices. The injection unit is composed of the fuel pump 51, the injector 50 and the like mentioned above. Furthermore, a fuel filter 68 for removing foreign matters within the fuel is provided in an upstream side of the fuel pump 51. In this embodiment, with reference to Fig. 4, the fuel pump 51 and the fuel filter 68 are arranged outside the fuel tank 9A. However, the structure may be made such that the apparatus are installed within the fuel tank 9A.

Further, an excessive component of the fuel fed to the injector 50 through the operation of the fuel pump 50 is returned to the fuel tank 9A by a pusher regulator 69. Then, as an auxiliary device for controlling the injection unit, for example, a cut sensor 70, a fuel pump relay 71 and the like are provided so as to be connected to the controller 58.

Furthermore, a battery 72 is connected to the controller 58 and an electric power is supplied thereto, and further, the controller 58 is also connected to a combination meter 73 so as to indicate a remaining amount of the fuel, an alarm with respect to the fuel injecting system and the like on a meter panel 73a.

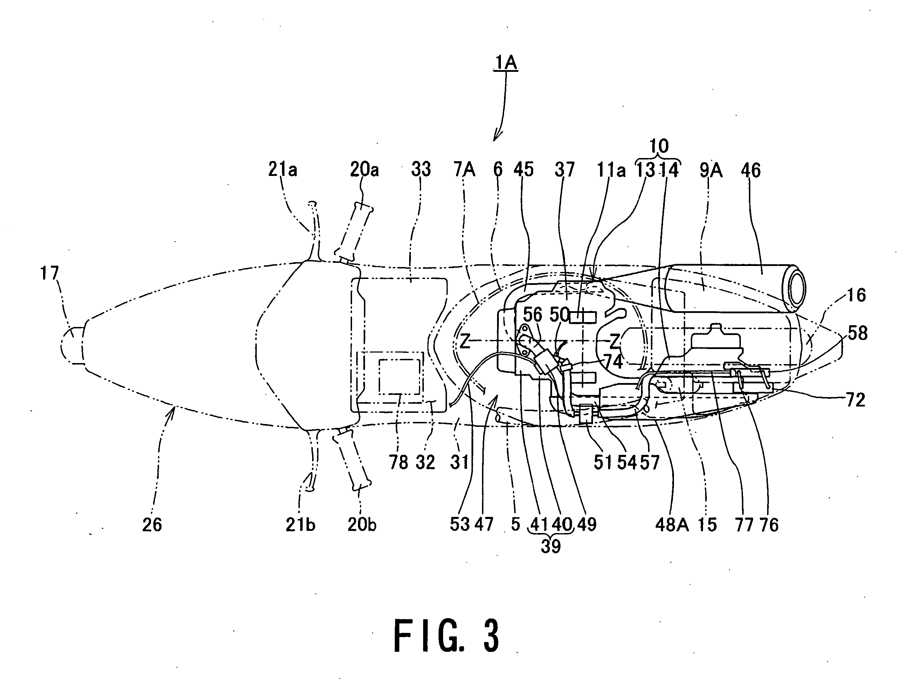

Hereunder, a description will be given of an arrangement of the intake apparatus 47. As shown in Figs. 2 and 3, the air cleaner 48A constituting the intake apparatus 47 is arranged on the transmission case 14 of the unit swing type engine 10, and the throttle body 49 provided with the injector 50 is arranged on the cylinder block 40 disposed in an obliquely front portion thereof. In this case, the air cleaner 48A, the throttle body 49, and the suction pipe 54 and the intake pipe 56 connecting these members are integrally formed and fixed to the upper surface of the engine 10 so as to be integrally swung.

Further, the fuel pump 51 is arranged above the suction pipe 54 and fixed to the rear frame 5, and the fuel hose 57 having an elasticity or flexibility extends from the fuel pump 51 to the fuel tank 9A and the injector 50. Then, the fuel hose 57 is fixed to a bottom surface of the article accommodation box 7A, for example, by a clamp 74 near the injector 50, thereby preventing the fuel hose 57 from coming off from the injector 50 when the injector 50 swings together with the engine 10.

Further, the controller 58 and the battery 72 are disposed to the side portion of the fuel tank 9A provided at the back of the accommodation box 7A adjacent to the fuel tank 9 in a parallel manner. Since the side portion of the fuel tank 9A at the back of the accommodation box 7A is apart from the engine 10 and the periphery thereof is surrounded by the rear frame cover 30, it is hard for heat generated by the unit swing type engine 10 to be transmitted to the controller 58 if the controller 58 is arranged in this place, and water-proof and dust-proof characteristics are high, so that it is preferable to place the controller 58. Further, if the unit swing type engine 10 is provided with the water-cooling-type engine main body, the engine is disposed to the place apart from the radiators 42a and 42b, so that the controller 58 is less little affected by an exhaust heat discharged from the radiator.

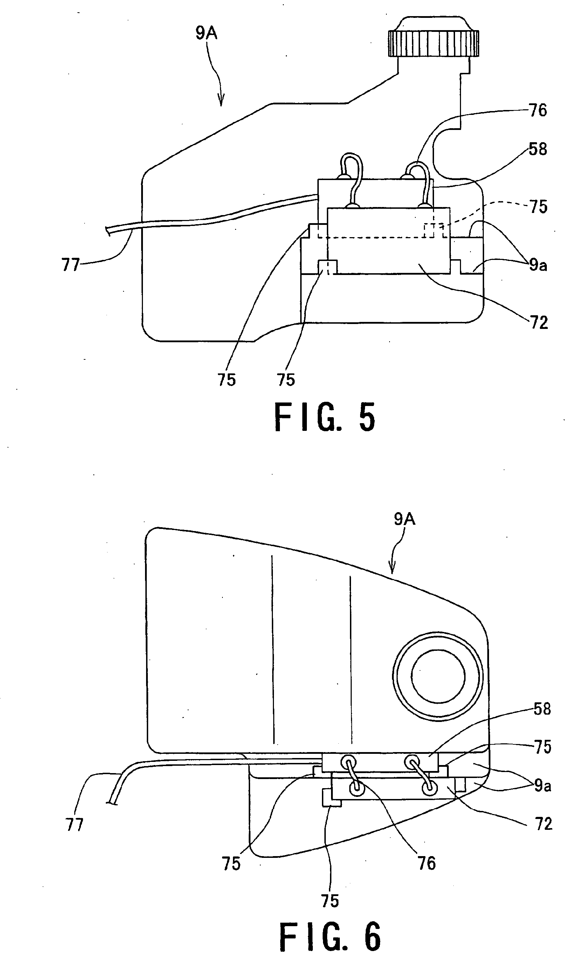

Fig. 5 is an enlarged left side elevational view of the fuel tank 9A and Fig. 6 is an enlarged plan view of the fuel tank 9A. As shown in Figs. 5 and 6, a step portion 9a is formed, for example, on a left side surface of the fuel tank 9A to thereby form the space for placing the controller 58 and the battery 72. Further, a projection 75 for fixing is provided to the space corresponding to the shape of the bottom surface of the controller 58 and the battery 72 to position and fix the same.

The controller 58 and the battery 72 are disposed in parallel to each other to make short the length of a wire 76 between both of the elements 58 and 72. A control cable 77 extends towards the injector 50 from the controller 58. In this case, the floor lower portion receiving chamber 32 formed between the rear leg shield 28 and the lower leg shield 29 may be employed as the other place where the heat from the unit swing type engine 10 and the radiators 42a and 42b is hard to be transmitted and the conditions for arranging the controller 58 having high water-proof and dust-proof characteristics are satisfied. In the example shown in Figs. 2 and 3 with double-dotted chain line, the controller 78 is arranged within the floor lower portion receiving chamber 32.

In this case, a large accommodation capacity (inner volume) is required for the accommodation box 7A arranged above the unit swing type engine 10. Further, the intake apparatus 47 is arranged between the unit swing type engine 10 and the accommodation box 7A, and the bottom surface thereof is formed so as to provide such a shape that the rear cushion unit 15 is not brought into contact with any of the unit swing type engine 10 and the intake apparatus 47 in a state of being most compressed, due to a vertical swing motion thereof.

In particular, the bottom surface of the article accommodation box 7A is formed in an obliquely forward descending direction so as to be substantially in parallel to a line connecting two points at the highest position of an upper profile 79 of the unit swing type engine 10 and the intake apparatus 47 in a state that the rear cushion unit 15 is most compressed, that is, in the present embodiment, a line X-X connecting an upper portion of the cylinder head 41 and an upper portion of the throttle body 49 or a line X'-X' connecting an upper portion of the cylinder head 41 and an upper portion of the air cleaner 48.

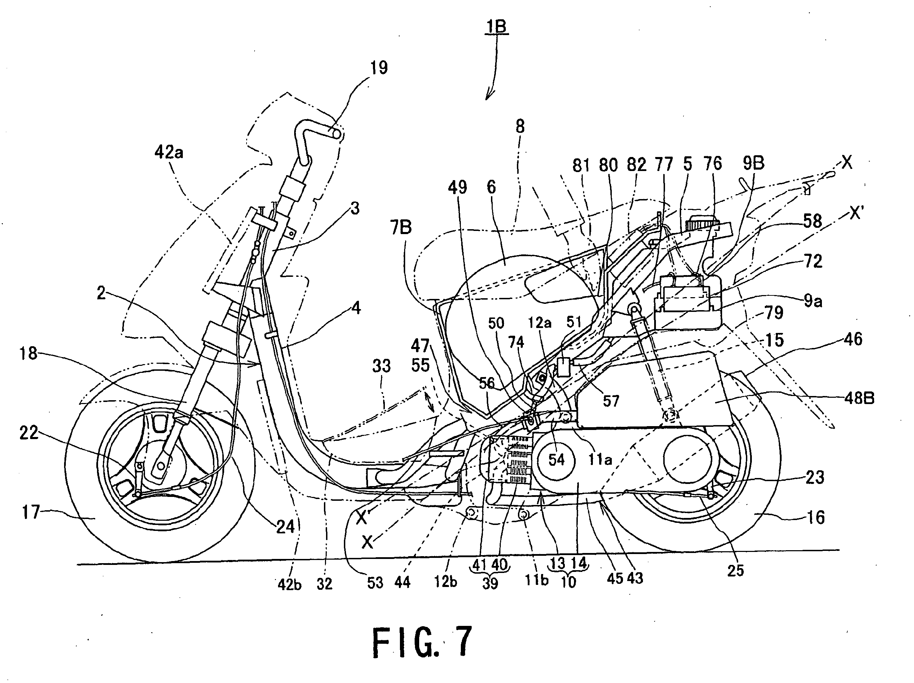

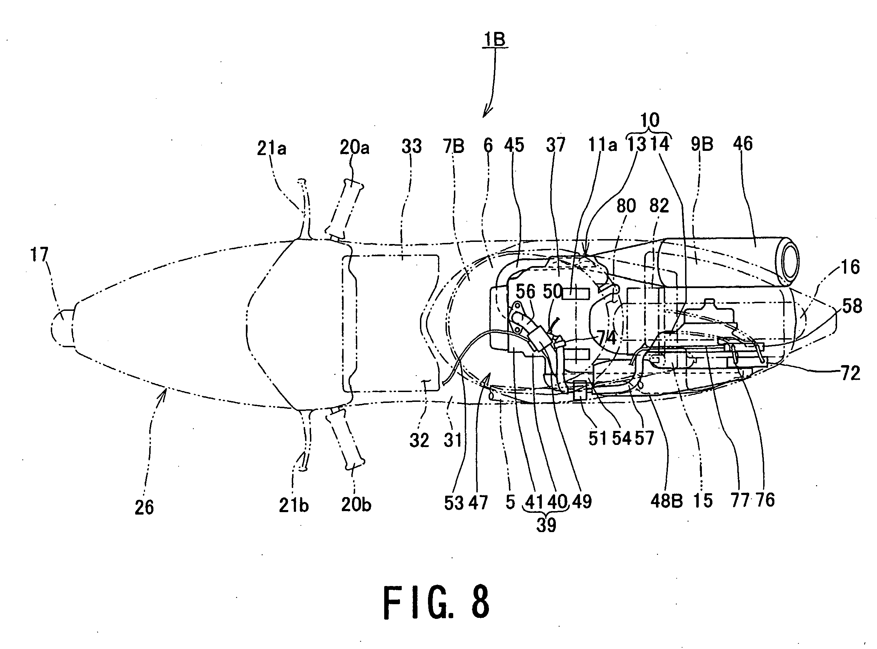

Figs. 7 and 8 show a second example of the first embodiment of a scooter type vehicle 1B to which the present invention is applicable, in which Fig. 7 is a left side elevational view showing an internal structure of the scooter type vehicle 1B and Fig. 8 is a schematic plan view of the scooter type vehicle 1B shown in Fig. 7.

In this second example, the same reference numerals are attached to the same elements as those of the scooter type vehicle 1A shown in the first example, and the description thereof will be omitted hereunder as occasion demands.

As shown in Figs. 7 and 8, the scooter type vehicle 1B is different from the scooter type vehicle 1A shown in the first example in the shape of the article accommodation box 7A. An article accommodation box 7B of the scooter type vehicle 1B shown in the second example has a structure that a helmet take-out space 80 is formed to a rear portion and a rear lower portion thereof, thereby making it easy to take out the helmet 6 by inserting a hand 81 into the helmet take-out space 80 when the user takes out the helmet 6. Further, the article accommodation box 7B having such shape may be applicable to a conventional structure of the vehicle using a carburetor.

Further, in the first example, it was mentioned that the floor lower portion receiving chamber 32 formed between the rear leg shield 28 and the lower leg shield 29 may be employed as the other place where the heat from the unit swing type engine 10 and the radiators 42a and 42b is hard to be transmitted and the conditions for arranging the controller 58 having high water-proof and dust-proof characteristics are satisfied. However, in this second example, a controller 82 may be arranged in a space at the back portion of the helmet 6 in the accommodation box 7B as shown with a double-dotted chain line.

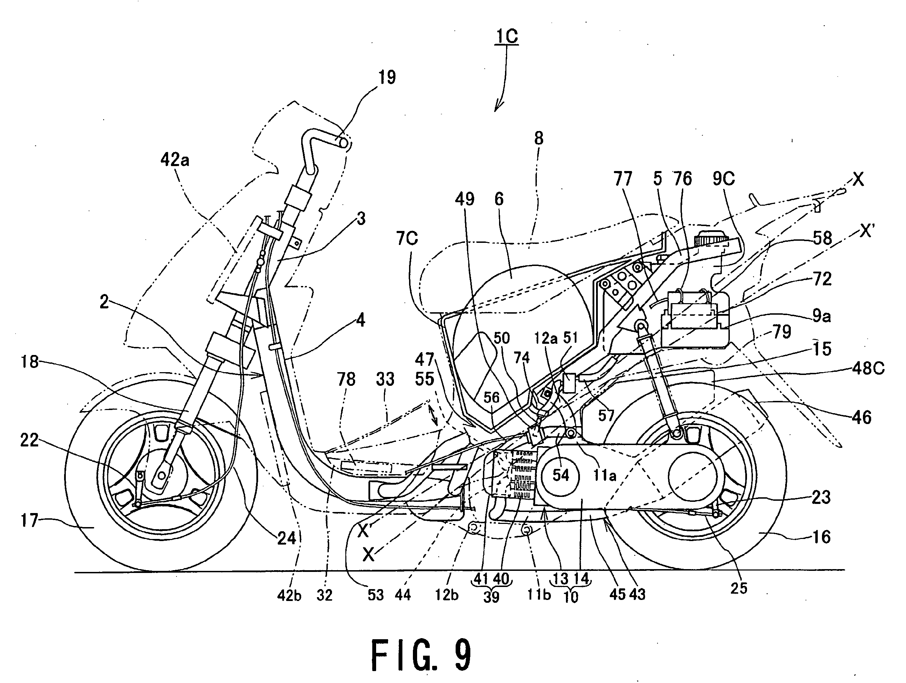

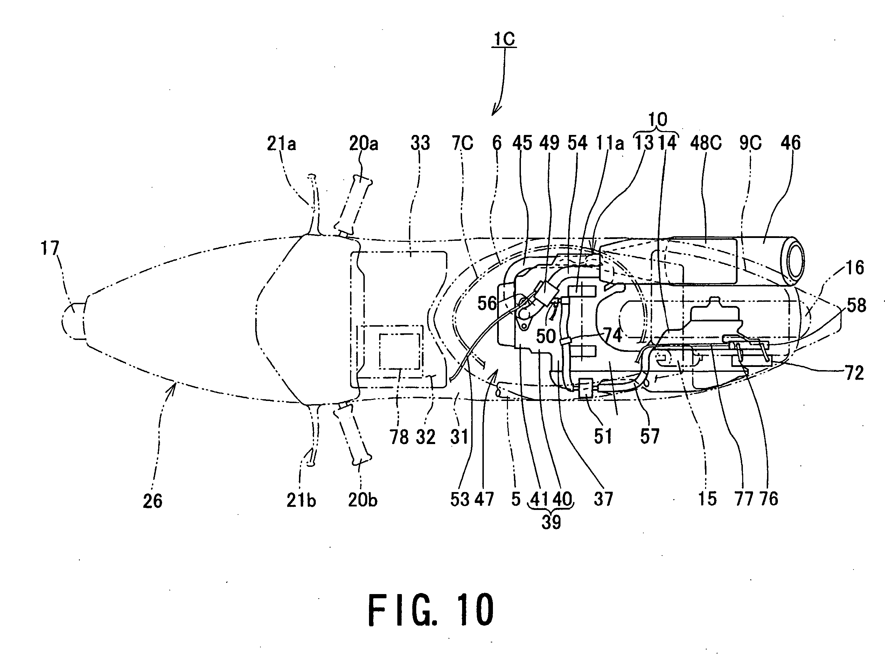

Figs. 9 and 10 represent a third example of the first embodiment of a scooter type vehicle 1C to which the present invention is applicable, in which Fig. 9 is a left side elevational view showing an internal structure of the scooter type vehicle 1C and Fig. 10 is a schematic plan view thereof.

With reference to Figs. 9 and 10, the same reference numerals are attached to the same elements as those of the scooter type vehicle 1A of the first example, and the description thereof will be omitted herein as occasion demands.

As shown in Figs. 9 and 10, the scooter type vehicle 1C is different from that 1A of the first example in the arrangement of the air cleaner 48A. An air cleaner 48C of the scooter type vehicle 1C of the third example is arranged above the muffler 46. Accordingly, the throttle body 49 is arranged to a side (a right side) opposite to that of the first example.

A second embodiment of the scooter type vehicle according to the present invention will be further described hereunder.

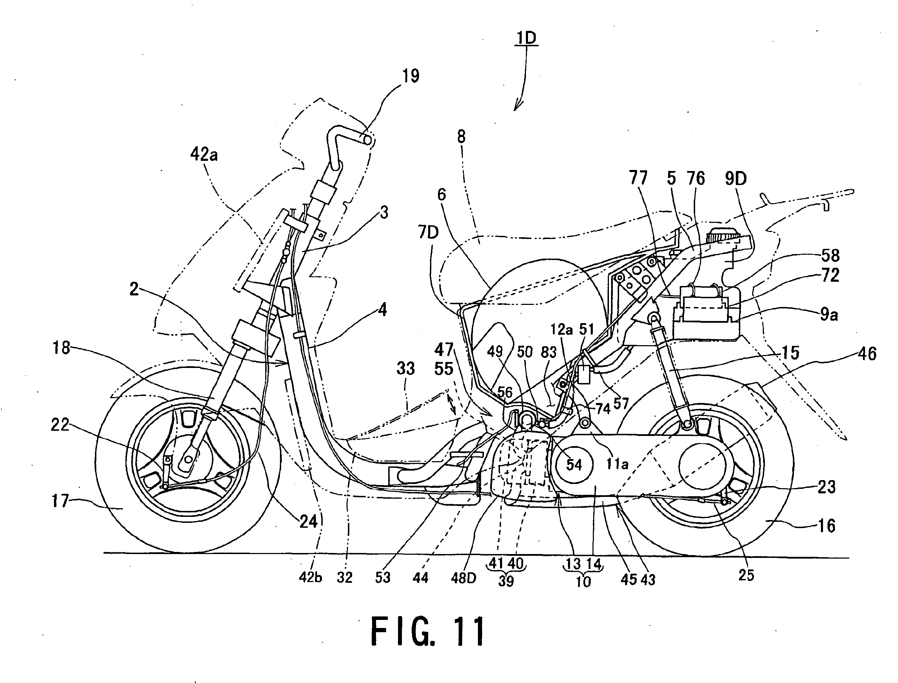

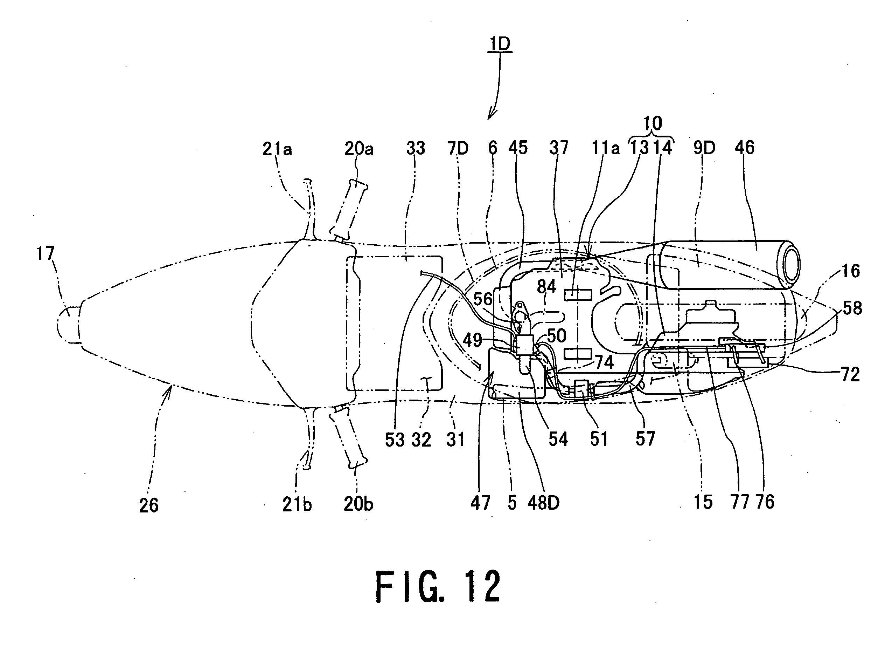

Figs. 11 and 12 show a first example of a second embodiment of a scooter type vehicle 1D to which the present invention is applicable. In this example, the same reference numerals are attached to the same elements as those of the scooter type vehicle 1A shown in the first embodiment, and the description thereof will be omitted herein as occasion demands.

As shown in Figs. 11 and 12, the scooter type vehicle 1D basically has the same structure as that of the scooter type vehicle 1A of the first example of the first embodiment. However, it is different in the following points.

At first, a bottom surface of an accommodation box 7D has a portion extending in a space formed between the engine suspending boss 11a disposed on the upper surface of the engine 10 and the throttle body 49 arranged in front thereof so as to form a deepest portion 83 of the accommodation box 7D. Accordingly, an article having long length can be accommodated in the deepest portion 83. Further, the highest portion of the injector 50 mounted to the throttle body 49 is arranged above the deepest portion 83. Accordingly, the fuel hose 57 extending from the fuel pump 51 to the injector 50 and the control cable 77 extending from the controller 58 to the injector 50 are fixed to the deepest portion 83 of the accommodation box 7D, for example, by means of clamp 74.

An air cleaner 48D is arranged in a space formed on a left side surface of the cylinder assembly 39 and in front of the transmission case 14. Then, the suction pipe 54 extends from the air cleaner 48D in a direction perpendicular to the vehicle forward moving direction in a plan view, and the throttle body 49 and the intake pipe 56 are connected linearly to a downstream side thereof.

As mentioned above, by arranging the air cleaner 48D, the suction pipe 54, the throttle body 49 and the intake pipe 56 in the direction perpendicular to the vehicle forward moving direction in a substantially linear manner, an air resistance can be reduced and an intake efficiency can be improved to thereby increase an output of the engine.

Then, the throttle cable 53 is connected to the front side of the vehicle in the throttle body 49, and the fuel hose 57 and the control cable 77 are connected to the rear side thereof. As mentioned above, since it is not necessary to forcibly bend the hoses through the connection of the hoses and the cables, a durability thereof can be improved and an operability of the throttle cable 53 can be also improved.

In this first example of the second embodiment, a four-stroke-cycle engine is mentioned. However, the present invention may be applicable to the two-stroke-cycle engine main body, in which the intake pipe 84 extends in a direction of the crank case 37 and is connected, as shown by a double-dotted chain line in Fig. 12. Further, the unit swing type engine 10 is suspended only at the upper side position. The shape or structure of such article accommodation box 7D can be applicable to a conventional structure of the scooter type vehicle.

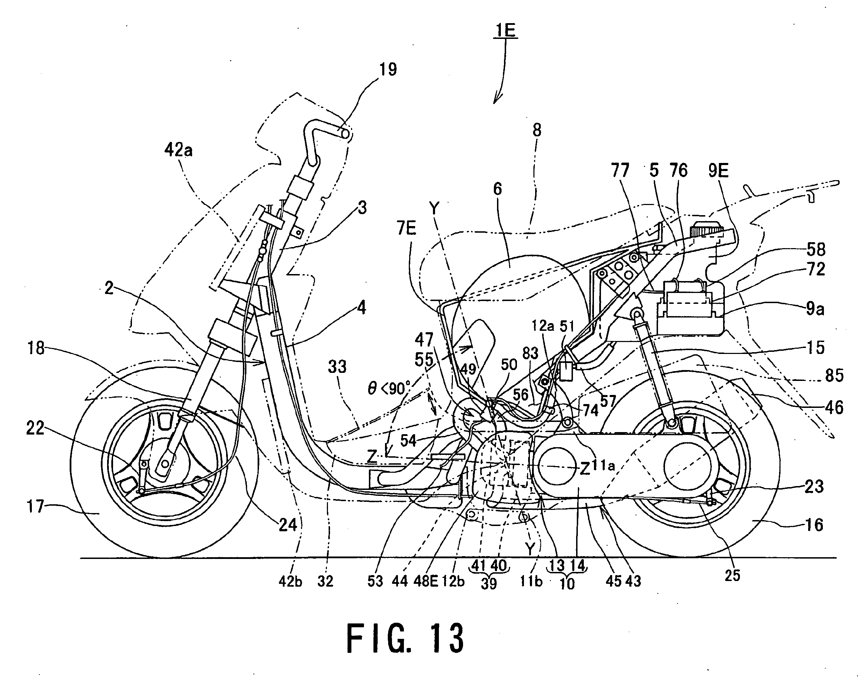

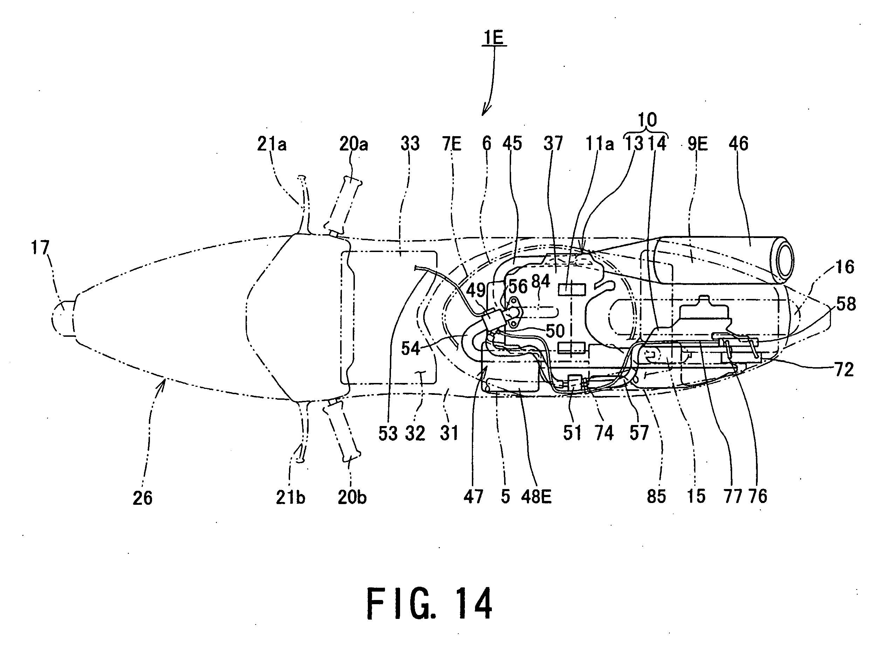

Figs. 13 and 14 show a second example of the second embodiment of a scooter type vehicle 1E to which the present invention is applicable, in which Fig. 13 is a left side elevational view showing an internal structure of the scooter type vehicle 1E and Fig. 14 is a schematic plan view of the scooter type vehicle 1E shown in Fig 13. In this case, the same reference numerals are attached to the same elements as those of the scooter type vehicle 1D shown in the first example of the second embodiment shown in FIGs. 11 and 12, and the description thereof is hence omitted herein as occasion demands.

As shown in Figs. 13 and 14, the scooter type vehicle 1E is different from the scooter type vehicle 1D shown in the first embodiment in view of an arranged shape of the intake apparatus 47. The suction pipe 54 is largely bent so that an axis Y-Y in a fuel injecting direction of the injector 50 crosses a central axis Z-Z of the cylinder assembly 39 at the front side of the vehicle so as to form an acute angle (within about 90 degrees), and the intake pipe 56 is also bent from the front side of the cylinder head 41 towards the intake port 55. In this example, in the case that the engine main body 13 is a two-stroke-cycle engine, the intake pipe 84 extends to the crank case 37 as shown by a double-dotted chain line and is then bent.

By arranging the injector 50 so that the axis Y-Y in the fuel injecting direction crosses the central axis Z-Z of the cylinder assembly 39 in the front side of the vehicle so as to form an acute angle, the fuel injected from the injector 50 is directed to such a direction as that a curvature becomes large within the intake port 55 and a flow amount of a mixture gas becomes large, and the fuel is linearly injected by the combustion chamber. As a result, a down-draft effect of the intake air can be also obtained, an intake efficiency, a charging efficiency and a combustion efficiency can be improved, and an increase of output can be caused.

In this case, the air cleaner 85 may be arranged above the transmission case 14 as shown by a double-dotted chain line. Further, in the case that the air cleaner 85 is arranged above the transmission case 14, the unit swing type engine 10 may be suspended at either the upper position or the lower position.

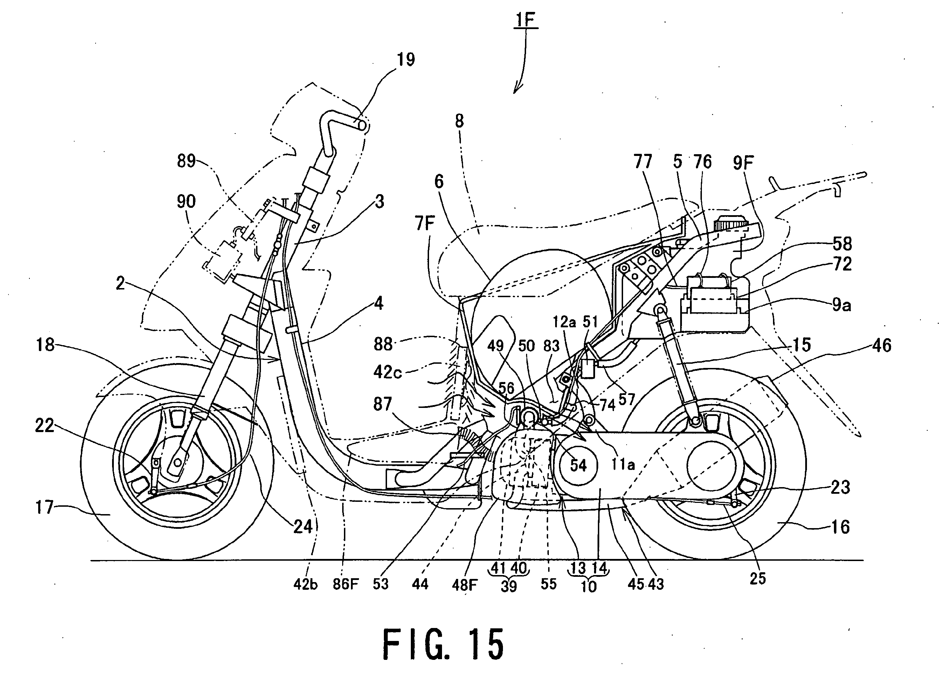

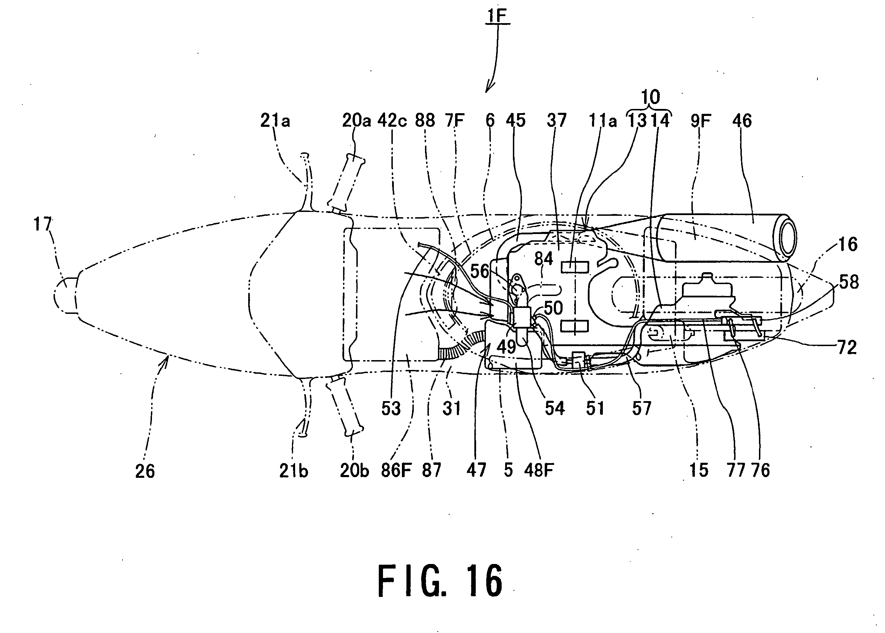

Figs. 15 and 16 show a third example of the second embodiment of a scooter type vehicle 1F to which the present invention is applicable, in which Fig. 15 is a left side elevational view showing an internal structure of the scooter type vehicle 1F and Fig. 16 is a schematic plan view of the scooter type vehicle 1F shown in Fig 15. In this example, the same reference numerals are attached to the same elements as those of the scooter type vehicle 1D shown in the first example of this second embodiment shown in FIGs. 11 and 12, and the description thereof is omitted herein as occasion demands.

As shown in Figs. 15 and 16, the scooter type vehicle 1F is different from the scooter type vehicle 1D shown in the first example of the second embodiment in the point that a second air cleaner 86F is disposed in an independent space below the step floor 31 in which the floor lower portion receiving chamber 32 is inherently provided by taking the case that the capacity of the air cleaner 48D is insufficient into consideration. Further, an initially provided air cleaner 48F (a first air cleaner) and the second air cleaner 86F are connected through a connecting pipe 87. However, the first air cleaner 48F integrally swings in a vertical direction together with the unit swing type engine 10 and the second air cleaner 86F is fixed to the vehicle body side, and for this reason, the connecting pipe 87 is formed by a material having an elasticity or a bellows-like structure. Further, a whole capacity of the air cleaner 48F can be easily adjusted by arranging the second air cleaner 86F, and an intake sound is reduced and a noise can be hence reduced due to an increase of capacity.

Further, as an embodiment of arranging the radiator in the case that the engine main body 13 is of a water-cooling-type, there is shown an example in which the radiator 42c is arranged in front of the article accommodation box 7F disposed below the drive seat 8. Then, by arranging the radiator 42c at this position, when the discharged wind from a fan 88 of the radiator 42c passes over the throttle body 49 with utilizing a bottom surface of the accommodation box 7F as a guide, the discharged wind blows out sands, dirt, dusts and the like existing around the throttle body 49 after being sputtered by the front wheel 17 and the rear wheel 16, so that it is possible to prevent the foreign matters from being attached to the throttle body 49 and the injector 50, and a durability and a reliability of the elements can be improved.

Further, an interior portion of the front leg shield 27 may be utilized as the other place, for example, where the heat from the unit swing type engine 10 and the radiators 42b and 42c is hard to be transmitted and the conditions for arranging the controller 58 having high water-proof and dust-proof characteristics are satisfied. In this example, a controller 89 and a battery 90 are arranged in the front leg shield 27 are shown by a double-dotted chain line in Fig. 15.

At a time of arranging the controller 89 and the battery 90 in the front leg shield 27, it is desirable to arrange the battery having a heavy weight on the lower side and fix both the elements, for example, to the head pipe 3. Further, if the controller 89 and the battery 90 are placed adjacently, the wire 76 between both the elements 89 and 90 may be shortened.

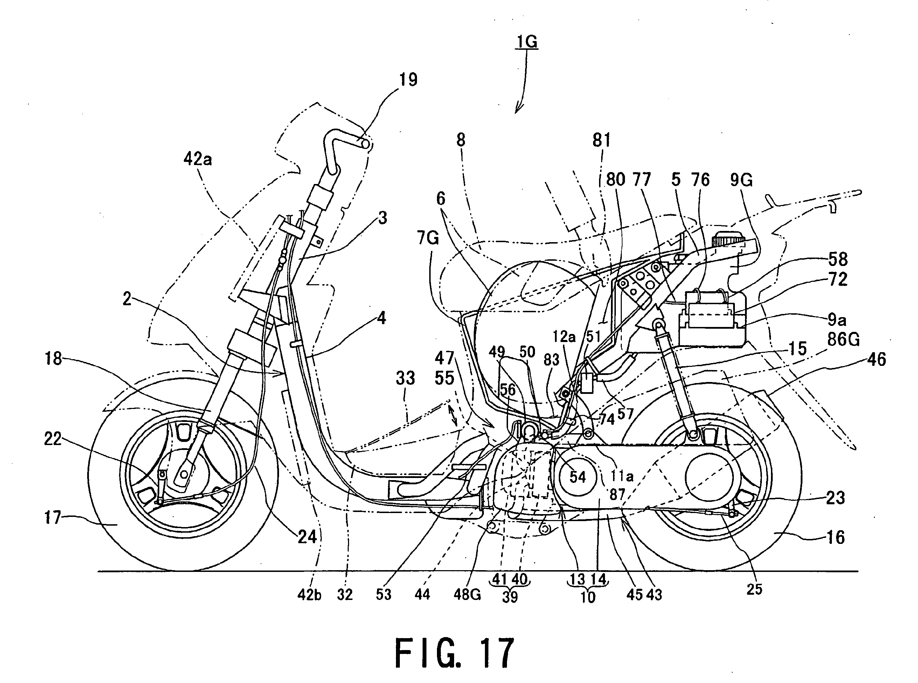

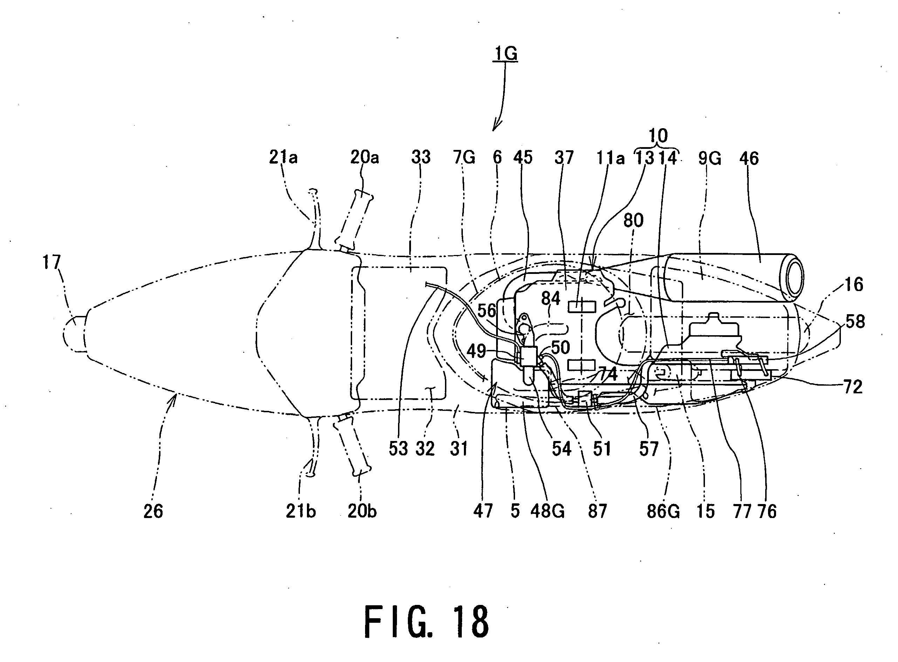

Figs. 17 and 18 show a fourth example of the second embodiment of a scooter type vehicle 1G to which the present invention is applicable, in which Fig. 17 is a left side elevational view showing an internal structure of the scooter type vehicle 1G and Fig. 18 is a schematic plan view of the scooter type vehicle 1G shown in Fig 17. In this example, the same reference numerals are attached to the same elements as those of the scooter type vehicle 1D shown in the first example of this second embodiment of FIGs. 11 and 12, and the description thereof is hence omitted herein as occasion demands.

As shown in Figs. 17 and 18, the scooter type vehicle 1G of this example is different from the scooter type vehicle 1D of the first example in the point that a second air cleaner 86G is disposed above the transmission case 14 by taking the case that a capacity of an initially provided air cleaner 48G (a first air cleaner) is insufficient into consideration. Further, both the air cleaners 48G and 86G may be connected by a connecting pipe 87 or may be integrally formed. Further, a whole capacity of the air cleaner 48G can be easily adjusted by arranging the second air cleaner 86G, and an intake sound is reduced and a noise can be hence reduced due to an increase of capacity.

Further, a helmet take-out space 80 is formed in a rear portion of the accommodation box 7G by forming the bottom surface of the accommodation box 7G in a stepped forward downward shape so that a front lower portion (a flange portion) or a rear lower portion of the helmet 6 can be inserted and fitted to the deepest portion 83, so that when the user takes out the helmet 6. Thus, the helmet 6 can be easily taken out by inserting the hand 81 into the helmet take-out space 80. In such arrangement, the shape of the accommodation box 7G may be applicable to a vehicle using the carburetor (not shown) of a conventional structure.

In this example, it is a matter of course that the present embodiment can be applied to the unit swing type engine of the two-stroke-cycle engine or the water-cooling-type engine. In the case of the two-stroke-cycle engine, as shown by a double-dotted chain line in Fig. 18, the intake pipe 84 extends in the direction of the crank case 37 to be connected. Further, in the case of the water-cooling-type engine, it is desirable to arrange the radiator at a position with which the running wind is easily brought into contact, such as at the forward portion 42a of the head pipe 3, the front portion 42b of the downtube 4 below the head pipe 3 or the like. Further, the unit swing type engine 10 may be suspended at either an upper position or a lower position.

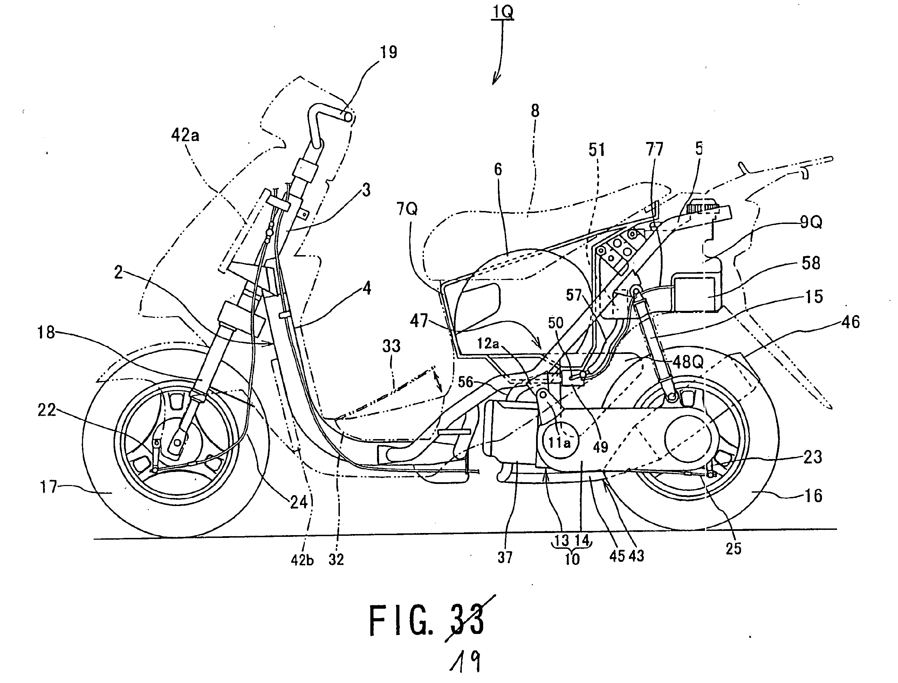

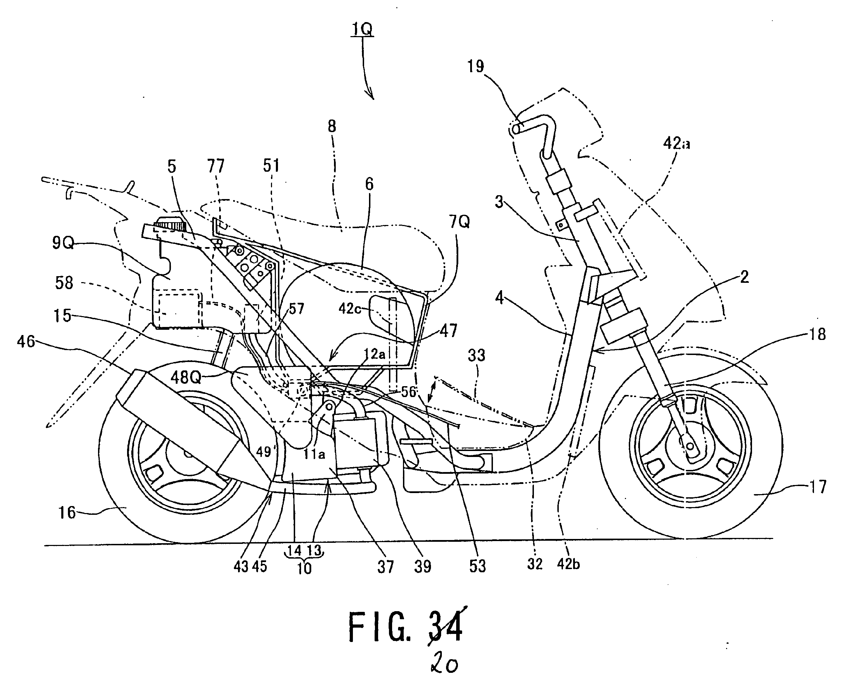

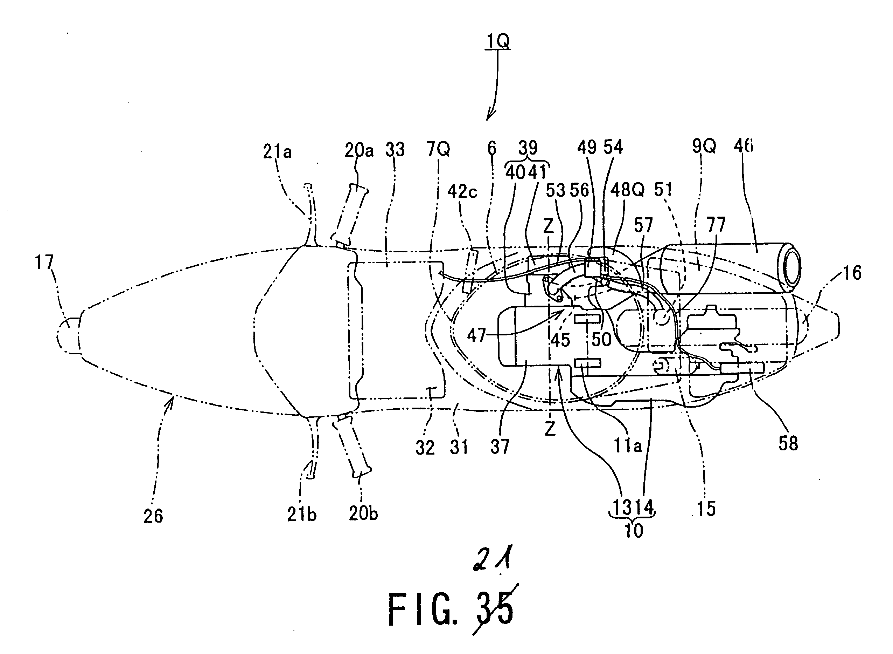

Figs. 19, 20 and 21 show a first example of a third embodiment of a scooter type vehicle 1Q to which the present invention is applicable, in which Fig. 19 is a left side elevational view showing an internal structure of the scooter type vehicle 1Q, Fig. 20 is a right side elevational view thereof, and Fig. 21 is a schematic plan view of the scooter type vehicle 1Q shown in Figs. 19 and 20. In this example, the same reference numerals are attached to the same elements as those of the scooter type vehicle 1A shown in the first example of the first embodiment of Figs. 1 to 3, and the description thereof is hence omitted herein as occasion demands.

As shown in Figs. 19, 20 and 21, the unit swing type engine 10 mounted on the scooter type vehicle 1Q is different from any structure described in the embodiments mentioned above and is provided with an engine main body 13 of a four-stroke-cycle engine formed in an L-shape in a plan view constituted by a crank case 37 provided with a crank shaft (not shown) extending along a forward moving direction of the vehicle and a cylinder assembly 39 arranged, for example, on the right side of the crank case 37 in a substantially horizontal manner so as to have a central axis Z-Z thereof perpendicular to a forward moving direction of the vehicle.

Further, an air cleaner 48Q is arranged on the right side of the vehicle body and in front of the muffler 46, and the throttle body 49 and the intake pipe 56 extend towards the forward portion of the air cleaner 48Q. The injector 50 is arranged on the article accommodation box 7Q side of the throttle body 49, that is, on the left side in the illustration, and the fuel hose 57 extending from the fuel pump 51 disposed in a fuel tank 9Q and the control cable 77 extending from the controller 58 arranged to the side portion of the fuel tank 9Q are connected to the injector 50. Then, the throttle cable 53 is connected to the right side of the throttle body 49.

Furthermore, the air cleaner 48Q has a C-shaped plan view and has the recessed portion formed so as to surround the throttle body 49. Thus, a connecting portion between the injector 50 and the fuel hose 57 is protected.

Then, since the injector 50 is arranged on the accommodation box 7Q side of the throttle body 49 and the throttle cable 53 is connected to the side opposite thereto, it is possible to sufficiently secure a space for arranging the throttle cable 53 and, thus, the throttle cable 53 can be easily inserted.

In the case that the cooling system of the engine is of a water-cooling-type, it is desirable to arrange the radiator at a position at which the running wind is easily brought into contact, such as the forward portion 42a of the head pipe 3, the front portion 42b of the downtube 4 below the head pipe 3 and the like. Further, a radiator 42c may be arranged on the accommodation box side.

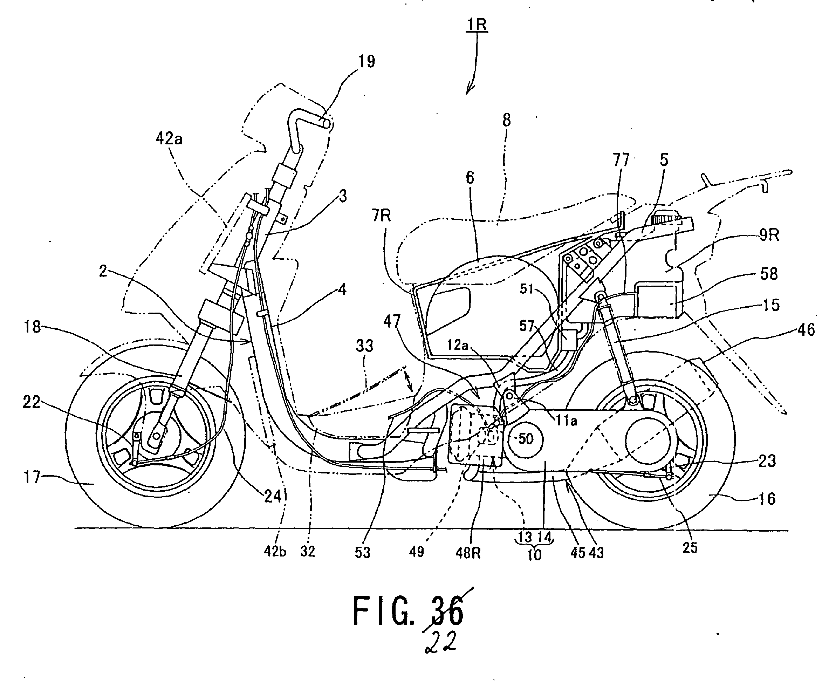

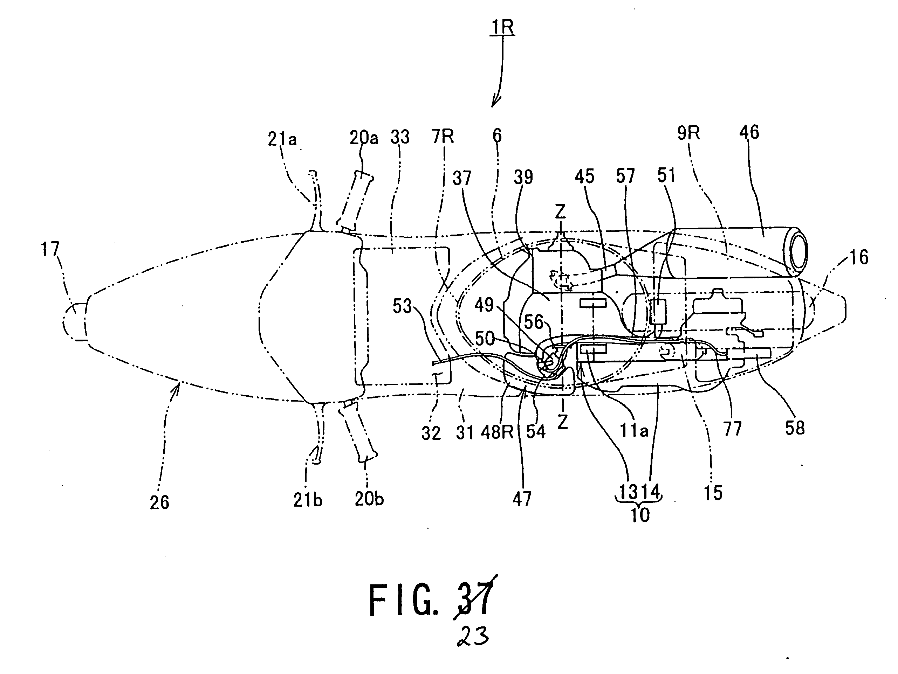

Figs. 22 and 23 show a second example of the third embodiment of a scooter type vehicle 1R to which the present invention is applicable, in which Fig. 22 is a left side elevational view showing an internal structure of the scooter type vehicle 1R and Fig. 23 is a schematic plan view of the scooter type vehicle 1R shown in Fig. 22. In this example, the same reference numerals are attached to the same elements as those of the scooter type vehicle 1Q shown in the first example of this embodiment, and the description thereof is hence omitted as occasion demands.

As shown in Figs. 22 and 23, the unit swing type engine 10 mounted on the scooter type vehicle 1R is provided with the engine main body 13 formed in an L-shape in a plan view in the same manner as that of the first example. However, the engine main body 13 is a two-stroke-cycle engine.

Since the engine main body 13 is a two-stroke-cycle engine, the throttle body 49 and the intake pipe 56 are connected to the crank case 37 and are arranged in a space in front of the transmission case 14 in this example. Further, an air cleaner 48R having a substantially C-shaped plan view is arranged in the same space and has the recessed portion arranged so as to surround the throttle body 49. Thus, the connecting portion between the injector 50 and the fuel hose 57 is protected.

In accordance with the present example, the fuel pump 51 is arranged outside a fuel tank 9R.

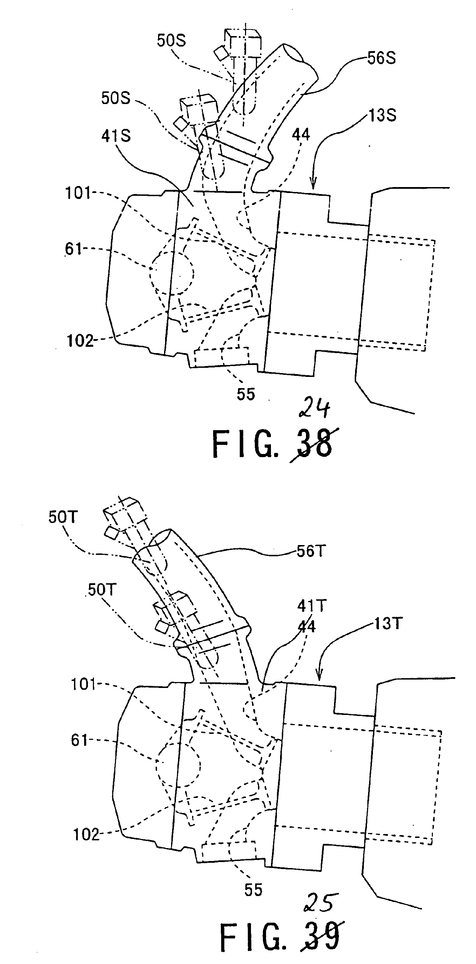

In all of the embodiments mentioned above, although the injector 50 is attached to the throttle body 49, in this example, the injector 50 can be arranged in the intake pipe 56 or the cylinder head 41, and examples of such embodiment will be shown in Figs. 24 and 25.

As shown in Figs. 24 and 25, the exhaust port 44 and the intake port 55 are respectively provided on lower side and upper sides in the cylinder head, and both the ports 44 and 55 are opened and closed through the operation of an intake valve 101 and an exhaust valve 102 which are operated via the cam shaft 61.

Fig. 24 shows an embodiment in which an intake pipe 56S extends from a rear portion of an engine main body 13S to be connected to the intake port 55 of a cylinder head 41S, and Fig. 25 shows an embodiment in which an intake pipe 56T extends from a front portion of an engine main body 13T in an inverse manner to be connected to the intake port 55 of a cylinder head 41T. In both of the cases, the injectors 50S and 50T can be inserted and attached to the intermediate portions of the intake pipes 56S and 56T and to the cylinder heads 41S and 41T.

It is to be noted that the present invention is not limited to the described embodiments and many other changes and modifications may be made without departing from the scopes of the appended claims.

## Claims

1. A scooter type vehicle (1) comprising:
a unit swing type engine (10) provided with an engine body (13) having a cylinder assembly (39) forward inclined in a substantially horizontal direction and having a central axis (Z-Z) arranged along a longitudinal direction of a vehicle body and a transmission case (14) rearward extending from one side of the engine body (13) and supporting a rear wheel (16) to a rear end thereof, swingably pivoted to a vehicle body frame (2) and flexibly supported to the vehicle body frame (2) through a cushion unit (15);
a fuel injection type intake apparatus (47) comprising a throttle body (49) connected to an intake port of the cylinder assembly, an air cleaner (48) connected to the throttle body (49), fuel injecting means (50) and a controller (58) for controlling a fuel injection amount of the fuel injecting means (50); and
an accommodation box (7) arranged above the unit swing type engine (10),
**characterized in that** said controller (58) is arranged adjacent to a fuel tank (9) which is arranged in the longitudinal direction of the vehicle body behind the accommodation box (7) and
(a) wherein a bottom surface of said accommodation box (7) is formed in an obliquely forward descending manner so as to be substantially parallel to a line (X-X, X'-X') connecting the highest position of said unit swing type engine (10) in a state that said cushion unit (15) is most compressed and the highest position of said fuel injecting means (50) or said air cleaner (48), or
(b) wherein said fuel injecting means (50) is arranged adjacent to said accommodation box (7), and the highest portion of said fuel injecting means (50) is arranged at a position higher than a bottom surface of said accommodation box (7), or
(c) wherein said fuel injecting means (50) is arranged adjacent to said accommodation box (7), and one end portion of a throttle cable (53) for operating a throttle valve (52) provided within said throttle body (49) and adjusting a flow amount of an intake air is arranged adjacent to said accommodation box (7).

2. A scooter type vehicle according to claim 1, wherein a projection (75) for fixing said controller (58) is provided to said fuel tank (9).

3. A scooter type vehicle according to any one of claims 1 or 2, wherein a battery (72) is arranged adjacent to said controller (58) in parallel thereto.

## Patentansprüche

1. Motorrollerartiges Fahrzeug (1) mit:
einem Einheitsmotor (10) vom Schwenktyp, der versehen ist mit einem Motorkörper (13) mit einer Zylinderanordnung (39), die in einer im Wesentlichen horizontalen Richtung nach vorn geneigt ist und eine Mittelachse (Z-Z) aufweist, die entlang einer Längsrichtung einer Fahrzeugkarosserie angeordnet ist, und einem Getriebegehäuse (14), das sich von einer Seite des Motorkörpers (13) nach hinten erstreckt und ein Hinterrad (16) an einem Hinterende desselben abstützt, welches schwenkbar an einem Fahrzeugkarosserierahmen (2) gelagert ist und am Fahrzeugkarosserierahmen (2) durch eine Dämpfungseinheit (15) flexibel abgestützt ist;
einer Einlassvorrichtung (47) vom Kraftstoffeinspritztyp mit einem Drosselkörper (49), die mit einem Einlasskanal der Zylinderanordnung verbunden ist, einem Luftfilter (48), der mit dem Drosselkörper (49) verbunden ist, einem Kraftstoffeinspritzmittel (50) und einem Regler (58) zum Regeln einer Kraftstoffeinspritzmenge des Kraftstoffeinspritzmittels (50); und
einem Aufnahmekasten (7), der über dem Einheitsmotor (10) vom Schwenktyp angeordnet ist,
**dadurch gekennzeichnet, dass** der Regler (58) benachbart zu einem Kraftstofftank (9) angeordnet ist, der in der Längsrichtung der Fahrzeugkarosserie hinter dem Aufnahmekasten (7) angeordnet ist, und
(a) wobei eine untere Oberfläche des Aufnahmekastens (7) in einer sich schräg nach vorn absenkenden Weise gebildet ist, so dass sie zu einer Linie (X-X, X'-X'), die die höchste Position des Einheitsmotors (10) vom Schwenktyp in einem Zustand, in dem die Dämpfungseinheit (15) am stärksten zusammengedrückt ist, und die höchste Position des Kraftstoffeinspritzmittels (50) oder des Luftfilters (48) verbindet, im Wesentlichen parallel ist, oder
(b) wobei das Kraftstoffeinspritzmittel (50) benachbart zum Aufnahmekasten (7) angeordnet ist und der höchste Teil des Kraftstoffeinspritzmittels (50) in einer höheren Position als eine untere Oberfläche des Aufnahmekastens (7) angeordnet ist, oder
(c) wobei das Kraftstoffeinspritzmittel (50) benachbart zum Aufnahmekasten (7) angeordnet ist und ein Endteil eines Drosselkabels (53) zum Betätigen eines Drosselventils (52), das innerhalb des Drosselkörpers (49) vorgesehen ist und eine Durchflussmenge einer Einlassluft einstellt, benachbart zum Aufnahmekasten (7) angeordnet ist.

2. Motorrollerartiges Fahrzeug nach Anspruch 1, wobei ein Vorsprung (75) zum Befestigen des Reglers (58) am Kraftstofftank (9) vorgesehen ist.

3. Motorrollerartiges Fahrzeug nach einem der Ansprüche 1 oder 2, wobei eine Batterie (72) benachbart zum Regler (58) parallel zu diesem angeordnet ist.

## Revendications

1. Véhicule du type scooter (1) comprenant :
un moteur du type à bloc oscillant (10) pourvu d'un corps de moteur (13) ayant un ensemble de cylindre (39) incliné vers l'avant dans une direction sensiblement horizontale et ayant un axe central (Z-Z) agencé selon une direction longitudinale du corps du véhicule et un boîtier de transmission (14) s'étendant vers l'arrière depuis un côté du corps de moteur (13) et supportant une roue arrière (16) sur une extrémité arrière de celui-ci, pivotant de manière oscillante sur un cadre de corps de véhicule (2) et supporté flexiblement sur le cadre de corps de véhicule (2) par une unité d'amortisseurs (15) ;
un appareil d'admission du type d'injection de carburant (47) comprenant un corps de papillon (49) connecté à un orifice d'admission de l'ensemble de cylindre, un filtre à air (48) connecté au corps de papillon (49), des moyens d'injection de carburant (50) et une commande (58) pour commander une quantité de carburant injecté des moyens d'injection de carburant (50) ; et
Un carter (7) agencé au-dessus du moteur du type à bloc oscillant (10),
**Caractérisé en ce que** ladite commande (58) est agencée au voisinage d'un réservoir de carburant (9) qui est agencé dans la direction longitudinale du corps de véhicule sous le carter (7) et
(a) dans lequel une surface inférieure dudit carter (7) est formée d'une manière descendant obliquement vers l'avant de façon à être sensiblement parallèle à une ligne (X-X, X'-X') connectant la position la plus haute dudit moteur du type à bloc oscillant (10) dans un état où ladite unité d'amortisseurs (15) est la plus comprimée et de position la plus haute desdits moyens d'injection de carburant (50) ou dudit filtre à air (48), ou
(b) dans lequel lesdits moyens d'injection de carburant (50) sont agencés au voisinage dudit carter (7), et la partie la plus haute desdits moyens d'injection de carburant (50) est agencée en une position plus haute qu'une surface inférieure dudit carter (7), ou
(c) dans lequel lesdits moyens d'injection de carburant (50) sont agencés au voisinage dudit carter (7), et une partie d'extrémité d'un câble de papillon (53) pour actionner un papillon (52) placée dans ledit corps de papillon (49) et ajustant une quantité d'écoulement d'un air d'entrée est agencée au voisinage dudit carter (7).

2. Véhicule du type scooter selon la revendication 1, dans lequel une saillie (75) pour fixer ladite commande (58) est placée sur ledit réservoir de carburant (9).

3. Véhicule du type scooter selon l'une quelconque des revendications 1 ou 2, dans lequel une batterie 72 est agencée au voisinage de ladite commande (58) en parallèle avec elle.
